# EUROPÄISCHE PATENTANMELDUNG

(11) **EP 1 345 399 A1**
(43) Veröffentlichungstag der Anmeldung: **17.09.2003**
(21) Anmeldenummer: 02005668.5
(22) Anmeldetag: 12.03.2002
(51) Int. Cl.: H04M 7/00, H04L 12/64, H04Q 3/00

(54) **Verfahren zur Steuerung von im Intelligenten Netzwerk üblichen Diensten im paketvermittelten Netzwerk mittels DTMF-Tönen**

(71) Anmelder: SIEMENS AKTIENGESELLSCHAFT, 80333 München (DE)
(72) Erfinder: Lueken, Joachim, 80686 München (DE)

(57) **Zusammenfassung**

Verfahren zur Steuerung eines Netzdienstes sowie Übermittlungsstelle, Dienstserver, Mediaserver und Computerprogrammprodukte zur Ausführung der Verfahren.

Im Zuge der Konvergenz der leitungsorientierten Telefonnetzen und den paketorientierten Datennetze zu heterogenen Netzen wird angestrebt, sogenannte IN (Intelligent Network)-Dienste auch in den Datennetzen zu implementieren. Bereits bekannte IN-Dienste sind zum Beispiel: VPNs (Virtual Private Networks), Anrufe mit Hilfe von Kreditkarten oder sogenannte "Free Phone"-Verbindungen über die mit "800" beginnenden Telefonnummern. Es wird erwartet, dass im Zuge der Integration dieser Dienste in die Paketnetze neue IN-Dienste zu Verfügung gestellt werden können.

Es wird vorgeschlagen, während einer Verbindung von einem ersten Leitungsnetz (3) über ein Paketnetz (9) zu einem zweiten Leitungsnetz (21) vom ersten Leitungsnetz (3) eintreffende Signaltöne mit Hilfe eines Media Gateways (8) aus dem Informationsfluss abzuzweigen und über ein Signalisierungsnetz (15) an einen Anwendungsserver (12) für intelligente Netzdienste weiterzuleiten. Auf diese Weise kann auch ein in einem Paketnetz (9) implementierter Anwendungsserver (12) von einem Leitungsnetz (3) aus gesteuert werden.

Durch diese Maßnahme gelangen die zur Steuerung des Dienstservers erforderlichen Steuersignale auch während einer Verbindung zwischen dem ersten Teilnehmer und dem zweiten Teilnehmer zum Anwendungsserver. Falls einer der Teilnehmer daher ein Steuerungssignal absetzt, das die Anforderung eines vom Dienstserver verwalteten Netzdienstes anzeigt, gelangt dieses Steuersignal auf jeden Fall zum Dienstserver, der daraufhin den angeforderten Dienst bereitstellen kann. Das Verfahren gemäß der Erfindung eignet sich daher besonders zum Abfangen von sogenannten Mid-call Triggern.

## Beschreibung

Die Erfindung betrifft Verfahren zur Steuerung eines mit Hilfe eines Dienstservers in einem Paketnetz implementierten Netzdienstes. Die Erfindung betrifft ferner Vorrichtungen zur Ausführung des Verfahrens.

Die Übermittlung von Informationen erfolgt zur Zeit über zwei Arten von Kommunikationsnetzen: das klassische, leitungsorientierte Telefonnetz, das hauptsächlich der Übermittlung von Sprache dient, und das Paketorientierte Datennetz, das vor allem zur Übermittlung von Daten eingerichtet ist. Das leitungsorientierte Telefonnetz wird nachfolgend kurz als Leitungsnetz und das Paketorientierte Datennetz kurz als Paketnetz bezeichnet.

In den klassischen Leitungsnetzen werden nicht nur Informationen zwischen den Verbindungsteilnehmern ausgetauscht, vielmehr werden auch Informationen übermittelt, die die Steuerung des Leitungsnetzes selbst betreffen. Diese Informationen werden nicht nur von den beteiligten Endgeräten, sondern auch von Einrichtungen der Netzknoten ausgewertet. Der Austausch dieser Informationen wird als Signalisierung bezeichnet. Da für die Signalisierung in den Leitungsnetzen im Allgemeinen definierte Kommunikationswege reserviert sind, spricht man auch von Signalisierungsnetzen. Grundsätzlich kann die Signalisierung auch über ein Paketnetz erfolgen.

Derzeit besteht die Tendenz, zur Übermittlung von bislang über das klassische Leitungsnetz geführten Informationen auch Paketnetze zu verwenden. Im Zuge der Konvergenz von Paketund Leitungsnetz werden beispielsweise Sprachverbindungen über ein Paketnetz geführt. Das Vermitteln von Telefon- oder Sprachverbindung über ein Paketnetz wird auch als VoIP (Voice over IP) bezeichnet. Aber auch breitbandige Multimediadienste, wie beispielsweise die Übermittlung von Videos, können über ein Paketnetz erfolgen. Die Übermittlung der bisher üblicherweise leitungsorientiert übermittelten Informationen erfolgt im Paketnetz mit Hilfe sogenannter Echtzeit-Paketströme, die in der Lage sind, die Informationen in Echtzeit durch das Paketnetz zu transportieren.

Im Zuge der Konvergenz der leitungsorientierten Telefonnetzen und den paketorientierten Datennetze zu heterogenen Netzen wird angestrebt, sogenannte IN(Intelligent Network)-Dienste auch in den Datennetzen zu implementieren. Bereits bekannte IN-Dienste sind zum Beispiel: VPNs (Virtual Private Networks), Anrufe mit Hilfe von Kreditkarten oder sogenannte "Free Phone"-Verbindungen über die mit "800" beginnenden Telefonnummern. Es wird erwartet, dass im Zuge der Integration dieser Dienste in die Paketnetze neue IN-Dienste zu Verfügung gestellt werden können.

In den klassischen Leitungsnetzen werden die IN-Dienste von SCPs(Service Control Points) gesteuert, die an das Signalisierungsnetz angeschlossen sind. Um Ansagen abzuspielen oder Signaltöne zu empfangen, dienen sogenannte IP(Intelligent Peripherals), die im Allgemeinen sowohl mit dem Signalisierungsnetz als auch den Umschaltern (switches) des klassischen Leitungsnetzes verbunden sind. Die erwähnten Signaltöne sind beispielsweise sogenannte DTMF(Dual Tone Multi Frequency)-Digits. Diese DTMF-Digits werden in diesem Zusammenhang als DTMF-Signaltöne oder kurz als Signaltöne bezeichnet.

In klassischen Telefonnetzen wird der SCP von den Umschaltern immer dann angesprochen, wenn diese bestimmte Trigger detektieren. Diese Trigger können beispielsweise bestimmte Telefonnummern oder Ereignisse wie zum Beispiel besetzte Anschlüsse sein. Die SCPs reagieren auf die Anfragen der Umschalter, indem beispielsweise ein IP zum Abspielen einer Ansage aktiviert wird. Das IP kann aber auch zum Einsammeln von Signaltönen verwendet werden.

Falls jemand beispielsweise mit Hilfe einer Kreditkarte telefonieren möchte, wird er zunächst eine bestimmte Nummer anwählen, wobei der von den Umschaltern angesprochene SCP das IP aktiviert, das dem Teilnehmer eine Ansage vorspielt, in der dieser aufgefordert wird, seine Kreditkartennummer und eine PIN-Nummer einzugeben. Falls die mit Hilfe der Signaltöne übermittelten Kreditkarten- und PIN-Nummern gültig sind, wird der Teilnehmer durch eine weitere Ansage aufgefordert, die Telefonnummer des gewünschten Gesprächspartners einzugeben, woraufhin der Verbindungsaufbau zum gewünschten Gesprächsteilnehmer erfolgt.

Es kommt vor, dass der Benutzer nach dem Ende des ersten Telefongesprächs ein weiteres Gespräch mit einem weiteren Gesprächsteilnehmer führen möchte, ohne erneut die Kreditkartennummer und die PIN-Nummer eingeben zu müssen. Für diesen Fall kann vorgesehen sein, dass der Teilnehmer durch Drücken einer Funktionstaste an seinem Endgerät, die mit einem besonderen Signalton verknüpft ist, erneut die Möglichkeit erhält, einen zweiten Gesprächspartner anzurufen.

Diese Art von IN-Diensten sollen auch in heterogenen Netzen, also den gemeinsamen Paket- und Leitungsnetzen, zur Verfügung gestellt werden. Es ist vorgesehen, in heterogenen Netzen die Funktion der SCP auf Anwendungsserver zu verlagern, die in das Paketnetz integriert sind. Diese Anwendungsserver sollen entsprechend den SCPs in den klassischen Telefonnetzen die IP-Dienste steuern. Die Anwendungsserver werden daher nachfolgend auch als Dienstserver bezeichnet. Wie die SCPs in den klassischen Telefonnetzen müssen auch die Dienstserver von den Teilnehmern aus steuerbar sein. Bislang fehlte jedoch ein Konzept zur Steuerung der dem Datennetz zugeordneten Dienstserver.

Ausgehend von diesem Stand der Technik liegt der Erfindung die Aufgabe zugrunde, Verfahren und Vorrichtungen zur Steuerung der einem Paketnetz zugeordneten Dienstserver anzugeben.

Diese Aufgabe wird zum einen durch ein Verfahren mit den folgenden Verfahrensschritten gelöst:
- Aufbau eines Übermittlungsweges von einem ersten Teilnehmer über das Paketnetz zu einem zweiten Teilnehmer;
- Abzweigen der zur Steuerung des Dienstservers erforderlichen Steuersignale aus dem Informationsfluss zwischen erstem Teilnehmer und zweitem Teilnehmer und Weiterleiten der Steuersignale über ein Signalisierungsnetz zum Dienstserver;
- Auswerten der Steuersignale durch den Dienstserver; und
- Bereitstellen eines angeforderten Dienstmerkmals durch den Dienstserver.

Bei einem ersten Verfahren gemäß der Erfindung werden die zur Steuerung des Anwendungsservers erforderlichen Steuersignale aus dem Informationsfluss zwischen erstem Teilnehmer und zweitem Teilnehmer abgezweigt und über ein Signalisierungsnetz zum Dienstserver weitergeleitet. Unter Weiterleiten soll dabei nicht zwangsläufig ein unverändertes Weiterleiten der Steuersignale, sondern auch das Umsetzen der Steuersignale von einem ersten Signalform im Rahmen eines ersten Übermittlungsprotokolls in eine zweite Signalform im Rahmen eines zweiten Übermittlungsprotokolls verstanden werden.

Durch diese Maßnahme gelangen die zur Steuerung des Dienstservers erforderlichen Steuersignale auch während einer Verbindung zwischen dem ersten Teilnehmer und dem zweiten Teilnehmer zum Anwendungsserver. Falls einer der Teilnehmer daher ein Steuerungssignal absetzt, das die Anforderung eines vom Dienstserver verwalteten Netzdienstes anzeigt, gelangt dieses Steuersignal auf jeden Fall zum Dienstserver, der daraufhin den angeforderten Dienst bereitstellen kann. Das Verfahren gemäß der Erfindung eignet sich daher besonders zum Abfangen von sogenannten Mid-call Triggern.

Bei einer bevorzugten Ausführungsform werden die Steuersignale gleichzeitig an den zweiten Teilnehmer übertragen.

Dies ist dann von Vorteil, wenn der zweite Teilnehmer ebenfalls die Übertragung von Steuersignalen, insbesondere Signaltönen, erwartet. Dies ist beispielsweise dann der Fall, wenn es sich bei dem zweiten Teilnehmer um das Call-Center einer Direktbank handelt.

Bei einer weiteren bevorzugten Ausführungsform des Verfahrens sind die Steuersignale Signaltöne, die von einer Übermittlungsstelle zwischen Paketnetz und Leitungsnetz aus dem Informationsfluss zwischen erstem und zweitem Teilnehmer abgezweigt werden.

Dieses Verfahren bietet den Vorteil, dass dazu Übermittlungsstellen verwendet werden können, die das Übertragen von Signaltönen über das Signalisierungsnetz abseits des eigentlichen Übermittlungsweges zwischen dem ersten und dem zweiten Teilnehmer bereits beherrschen.

Die genannte Aufgabe wird ferner auch durch ein Verfahren mit den folgenden Verfahrensschritten gelöst:
- Aufbau eines Übermittlungsweges von einem Teilnehmer zu einem Mediaserver;
- Übermittlung von Steuerinformation vom Teilnehmer über das Paketnetz an den Mediaserver;
- Auswertung der Steuerinformation durch den Mediaserver und Umsetzung der Steuerinformation in Steuersignale für den Dienstserver;
- Weiterleiten der Steuersignale über ein Signalisierungsnetz an den Dienstserver;
- Auswertung der Steuersignale durch den Dienstserver; und
- Bereitstellen eines angeforderten Dienstmerkmals durch den Dienstserver.

Bei dem Verfahren gemäß der Erfindung kann die Übermittlung von Steuerinformationen an den Mediaserver mit Hilfe des EchtzeitPaketstroms erfolgen, der auch zur Übermittlung von Informationen zwischen einem ersten und einem zweiten Teilnehmer bei einer beliebigen Verbindung über das Paketnetz verwendet wird. Daher sind keine weiteren Modifikationen bei den verwendeten Vorrichtungen notwendig. Vielmehr wird die Auswertung der Steuerinformationen durch den Mediaserver vorgenommen, der die Steuerinformationen in Steuersignale für den Dienstserver umsetzt und an diesen weiterleitet.

Bei einer besonderen Ausführungsform dieses Verfahrens wird nach dem Einsammeln der Steuerinformationen durch den Mediaserver ein Übermittlungsweg zwischen einem ersten und einem zweiten Teilnehmer aufgebaut, wobei die bis zum Abbau des Übermittlungsweges auftretenden Steuerinformationen abgezweigt und dem Dienstserver zugeleitet werden.

Durch diese bevorzugte Ausführungsform des Verfahrens kann zunächst über den Mediaserver Information von Teilnehmern eingesammelt und dann eine Verbindung zwischen Teilnehmern aufgebaut werden, die auch auf während der Verbindung auftretende Trigger reagiert.

Nachfolgend wird die Erfindung im Einzelnen anhand der beigefügten Zeichnung erläutert. Es zeigen:
- Figur 1: eine Darstellung der Struktur einer Verbindung mit einem Mediaserver;
- Figur 2: eine Darstellung der Struktur einer Verbindung zwischen einem ersten Teilnehmer und einem zweiten Teilnehmer über ein Paketnetz; und
- Figur 3: ein Ablaufdiagramm bezüglich der in den Figuren 1 und 2 dargestellten Verbindungen.

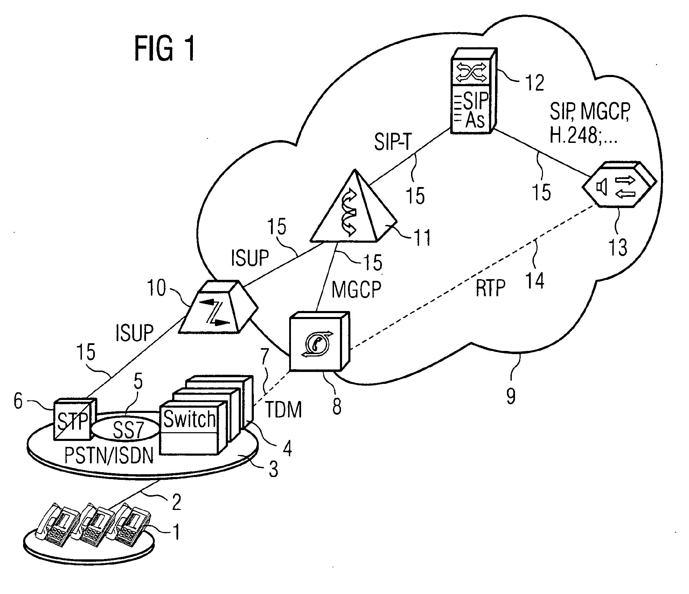

Figur 1 zeigt die Struktur einer Verbindung, mit der ein IN-Netzdienst initialisiert wird. Dabei sind Endgeräte 1 über eine lokale Verbindung 2 an ein herkömmliches Leitungsnetz 3 angeschlossen. Das Leitungsnetz 3 umfasst Umschalter (switches) 4, die untereinander kommunizieren. Die Umschalter 4 kommunizieren daneben über ein Signalisierungsnetz 5, bei dem es sich beispielsweise um das übliche SS7-Netz handelt, mit einem Signaling Transfer Point 6, der nachfolgend kurz als STP 6 bezeichnet wird. Die Umschalter 4 tauschen außerdem über eine TDM(Time Division Multiplexing)-Verbindung 7 Informationen mit einem Media Gateway 8 aus. Über das Media Gateway 8, das nachfolgend kurz mit MG 8 bezeichnet wird, wird der Übergang vom Leitungsnetz 3 in ein Paketnetz 9 bewerkstelligt.

Der STP 6 kommuniziert mit Hilfe von ISUP (ISDN User Part) mit einem Signaling Gateway 10, das im Folgenden kurz SG 10 genannt wird. Über das SG 10 geht die Signalisierung vom Leitungsnetz 3 in das Paketnetz 9 über.

Dem Signaling Gateway 10 und dem Media Gateway 8 ist ein Media Gateway Controller 11 zugeordnet. Der Media Gateway Controller 11 wird nachfolgend auch kurz als MGC 11 bezeichnet. Der MGC 11 kommuniziert mit dem Signaling Gateway 10 mittels ISUP und mit dem Media Gateway 8 mittels MGCP (Media Gateway Control Protocol). Außerdem kommuniziert der MGC 11 mit Hilfe von SIP (Session Initiation Protocol) mit einem Anwendungsserver 12, der über Protokolle wie SIP, MGCP oder H.248 oder ähnliche Protokolle mit einem Mediaserver 13 in Verbindung steht. Der Mediaserver 13 wiederum tauscht Informationen mit dem Media Gateway 8 mit Hilfe eines RTP (Real-Time Transfer Protocol)-Datenstrom 14 aus. Über die Umschalter 5 und das MG 8 besteht somit eine Verbindung zwischen einem der Endgeräte 1 und dem Mediaserver 13. Diese Verbindung wird im Bereich des Leitungsnetzes 3 über lokale Verbindungen 8 und über TDM-Verbindung 7 bewerkstelligt. Im Bereich des Paketnetzes 9 können der Verbindung jedoch nicht einzelne Leitungen zugeordnet werden. Vielmehr werden die Informationen im Bereich des Paketnetzes 9 durch DatenPakete transportiert, die je nach Paketnetz 9 als Internet-, X.25- oder Frame-Relay-Pakete, aber auch als ATM-Zellen ausgebildet sein können. Über die DatenPakete ist der Mediaserver 13 mit dem MG 8 verbunden. Trotz des im eigentlichen Sinne verbindungslosen Charakters besteht daher auf logisch abstrakter Ebene eine Verbindung in dem Sinne, in dem beispielsweise bei der Informationsübermittlung mittels TCP/IP mit Hilfe von sogenannten Flows Webserver und Browser miteinander verbunden sind.

Auch die Kommunikation zwischen dem STP 6, dem SG 10, dem MGC 11, dem MG 8, dem Anwendungsserver 12 und dem Mediaserver 13 mit Hilfe der einschlägigen, der Signalisierung dienenden Protokolle stellt auf logisch abstrakter Ebene eine Verbindung dar, die zusammen ein Signalisierungsnetz 15 bilden, selbst wenn dafür keine bestimmten Leitungen reserviert sind.

Der Mediaserver 13 übernimmt im Paketnetz 9 die Funktionen, die in herkömmlichen Leitungsnetzen 3 sogenannte IPs(Intelligent Peripherals) ausgeübt haben, während der Anwendungsserver 12 die Funktionen der in herkömmlichen Leitungsnetzen 3 vorhandenen SCPs(Service Control Points) 6 übernimmt. Der Mediaserver 13 kann daher Ansagen abspielen, die an den Teilnehmer an einem der Endgeräte 1 übermittelt werden. Außerdem ist der Mediaserver 13 in der Lage, die von den Endgeräten abgegebenen Signaltöne einzusammeln. Das Abfragen und Einsammeln der Signaltöne wird auch UID (User Interactive Dialogue) genannt. Wenn im MG 8 komprimierende Codecs, wie zum Beispiel G.723, verwendet werden, erfolgt die Übertragung der Signaltöne im RTP-Datenstrom 14 in besonderen Datenpaketen gemäß RFC 2833, da die Signaltöne ansonsten bei der Übertragung verfälscht werden. Bei der Verwendung nicht komprimierender Codecs können die Signaltöne zusammen mit der übrigen Sprachinformationen in einem Echtzeit-Paketstrom übertragen werden.

Die von den Signaltönen übermittelten DTMF-Informationen können der Authentifizierung des Teilnehmers am Endgerät 1 dienen oder der Abfrage der vom Teilnehmer am Endgerät 1 gewünschten Rufnummer.

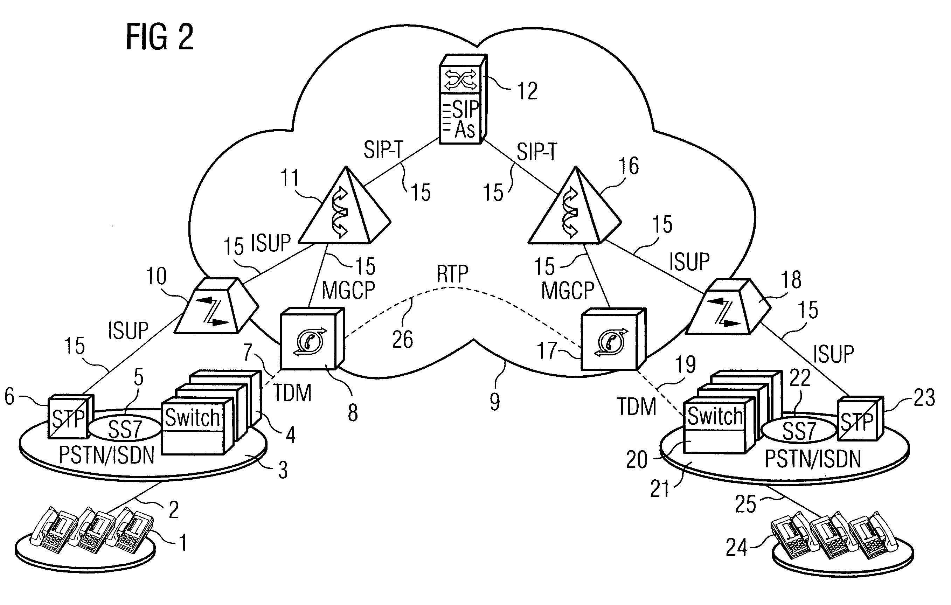

Nach dem Einsammeln der Dienstinformationen veranlasst der Anwendungsserver 12 den Abbau der Verbindung zum Mediaserver 13 und versucht beispielsweise eine Verbindung zu dem vom ersten Teilnehmer am Endgerät 1 gewünschten Gesprächsteilnehmer aufzubauen. Eine solche Verbindung ist in Figur 2 dargestellt.

Für den Verbindungsaufbau zu einem zweiten Teilnehmer kommuniziert der Anwendungsserver 12 nicht nur mit dem MGC 11 auf der dem ersten Teilnehmer zugeordneten, sogenannten A-Seite, sondern auch mit einem MGC 16 auf der B-Seite. Der Media Gateway Controller 16 tauscht Informationen über das Signalisierungsnetz 15 gemäß MGCP mit dem Media Gateway 17 und per ISUP mit dem Signaling Gateway 18 aus. Das Media Gateway 17 ist über eine TDM-Verbindung 19 mit Umschaltern 20 verbunden, die einem Leitungsnetz 21 zugeordnet sind. Im Leitungsnetz 21 ist auch ein Signalisierungsnetz 22 vorhanden, das die Umschalter 20 mit einem Signaling Transfer Point 23 verbindet. Die Umschalter 20 stellen schließlich auch eine Verbindung mit einem der Endgeräte 24 über eine lokale Verbindung 25 her.

Die eigentliche Sprachverbindung wird zwischen dem MG 8 auf der A-Seite und dem MG 17 auf der B-Seite mit Hilfe eines RTP-Datenstroms 26 bewerkstelligt. Im RTP-Datenstrom 26 können auch Signaltöne übertragen werden, die in besonderen Paketen nach RFC 2833 codiert sind, wenn in den den MGs 8 und 17 komprimierende Codecs verwendet werden, oder zusammen mit den anderen Sprachinformationen übertragen werden, wenn in den MG 8 und 17 nicht-komprimierende Codecs verwendet werden.

Beim Verbindungsaufbau zwischen erstem und zweitem Teilnehmer wird das Media Gateway 8 auf eine sogenannte Out-of-band-Signalisierung umgeschaltet. Dies bedeutet, dass die Signaltöne nicht länger in dem RTP-Datenstrom 26 eingebettet sind, sondern mit Hilfe der SIP INFO-Methode aus dem Informationsfluss zwischen erstem und zweitem Teilnehmer abgezweigt und über das Signalisierungsnetz 15 an den Anwendungsserver 12 weitergeleitet werden. Die Signalisierung nach der SIP INFO-Methode ist eine Signalisierungsnachricht, die wie andere SIP-Nachrichten an den Anwendungsserver 12 gesendet wird. Mit Hilfe dieser die Signaltöne betreffenden Signalisierungsnachricht kann dann im Anwendungsserver 12 eine Servicelogik aktiviert werden, die beispielsweise die Verbindung zum zweiten Teilnehmer auf der B-Seite abbaut und den ersten Teilnehmer erneut mit dem Mediaserver 13 verbindet.

Um die hier beschriebenen Verfahren durchführen zu können, sind im Wesentlichen zwei besondere Signalisierungsabläufe erforderlich. Zum Einen muss das MG 8 beim Aufbau der Verbindung zum Mediaserver 13 dem Anwendungsserver 12 seine Fähigkeit signalisieren, Signaltöne out-of-band übertragen zu können. Zum Anderen muss der Anwendungsserver 12 beim Aufbau der in Figur 2 dargestellten Verbindung zwischen dem ersten und dem zweiten Teilnehmer das MG 8 auf der A-Seite zum Umschalten auf die SIP INFO-Methode veranlassen.

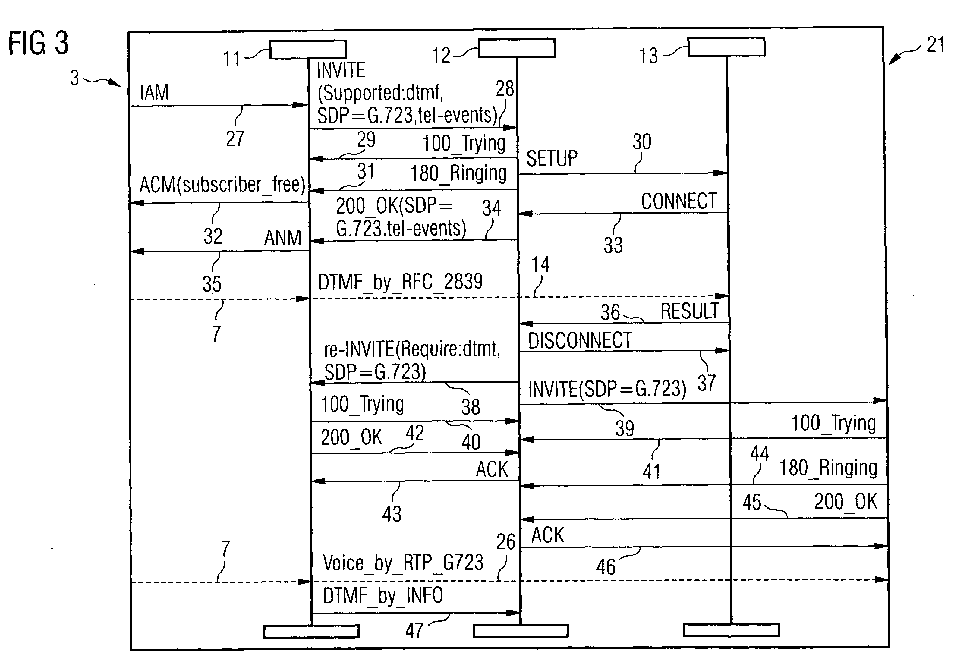

Dies wird nachfolgend anhand des in Figur 3 dargestellten Ablaufdiagramms näher erläutert. Zunächst wird von einem Umschalter 4 in einem Leitungsnetz 3 eine ISUP IAM(Initial Address Message)-Nachricht 27 an den MGC 11 gesendet. Das MGC 11 signalisiert daraufhin in der SIP INVITE Nachricht 28 dem Anwendungsserver 12, dass das dem MGC 11 zugeordnete MG 8 die Out-of-band-Übertragung von Signaltönen unterstützt. Dazu wird im sogenannten "Supported Header" ein neues Informationselement "dtmf" eingefügt. Ein derartiges Informationselement wird auch als "Option Tag" bezeichnet. Im vorliegenden Beispiel enthält der SDP(Session Description Protocol)-Abschnitt in der SIP INVITE-Nachricht 28 noch Angaben zum verwendeten Codec, nämlich G.723 und die Angabe "Telephone Events", die anzeigt, dass die Übertragung der Signaltöne durch besondere Datenpakete nach RFC 2833 im RTP-Datenstrom 14 erfolgen kann.

Der Anwendungsserver 12 quittiert dem MGC 11 daraufhin in der SIP 100 Trying-Meldung 29 den Empfang der SIP INVITE-Nachricht 28 und versucht mit einem SETUP-Befehl 30 den Mediaserver 13 zum Aufbau einer Verbindung zum MG 8 mit Hilfe des RTP-Datenstroms 14 zu veranlassen.

Im weiteren Verlauf sendet der Anwendungsserver 12 eine SIP 180 Ringing-Nachricht 31 an den MGC 11, der daraufhin eine ISUP ACM(Address Complete Message)-Nachricht 32 an das Leitungsnetz 3 absetzt. Die SIP 180 Ringing-Nachricht 31 und die ISUP ACM-Nachricht 32 dienen dazu, das Endgerät 1 zur Abgabe eines Klingelzeichens zu veranlassen. Die beiden Nachrichten 31 und 32 sind daher optional.

Der Mediaserver 13 meldet dem Anwendungsserver 12 den Abschluss des Verbindungsaufbaus mit Hilfe einer CONNECT-Meldung 33. Der Anwendungsserver 12 sendet darauf eine SIP 200 OK-Meldung 34 an das MGC 11, in deren SDP-Abschnitt der zu verwendende Codec, nämlich G.723, und die Angabe "Telephone-Events" enthalten sind. Letztere zeigt dem MGC 11 an, dass die Übertragung von Signaltönen nach RFC 2833 im RTP-Datenstrom 14 erfolgen soll. Der SDP-Abschnitt in der SIP 200 OK-Nachricht 34 sieht dann beispielsweise etwa wie folgt aus:
v = 0
o = alice 2890844526 2890844527 IN IP4 host.anywhere.com
s = New board design
e = alice@foo.org
t = 0 0
c = IN IP4 host.anywhere.com
m = audio 49170 RTP/AVP 4 97
a = rtpmap:4 G723/8000
a = rtpmap:97 telephone-events

Der MGC 11 teilt daraufhin dem Leitungsnetz 3 den im Paketnetz 9 erfolgreichen Erfindungsaufbau in einer ISUP ANM-Nachricht 35 mit. Damit können mit Hilfe des zwischen dem MG 8 und dem Mediaserver 13 eingerichteten RTP-Datenstroms 14 Informationen zwischen dem Teilnehmer an einem der Endgeräte 1 und dem Mediaserver 13 ausgetauscht werden. Der Informationsfluss zwischen dem Leitungsnetz 3 und dem MG 8 wird dabei mit Hilfe der TDM-Verbindung 7 bewerkstelligt.

Nach dem Einsammeln der vom Teilnehmer an einem der Endgeräte 1 mit Hilfe von Sprache oder Signaltönen übermittelten Informationen teilt der Mediaserver 13 dem Anwendungsserver 12 das Ergebnis in einer RESULT-Mitteilung 36 mit. Der Anwendungsserver 12 reagiert darauf mit einem DISCONNECT-Befehl 37, mit dem der Mediaserver 13 aufgefordert wird, die Verbindung mit dem MG 8 abzubauen. Außerdem sendet der Anwendungsserver 12 eine SIP re-INVITE-Nachricht 38 an den MGC 11. Diese Nachricht 38 enthält im sogenannten "Require Header" ein Informationselement "dtmf". Dieses Informationselement wird auch als "Option Tag" bezeichnet. Außerdem enthält die SIP re-INVITE Nachricht 38 nicht mehr die Angabe "telephone events", die zusammen mit der Angabe des verwendeten Codecs G.723 den MGC 11 anweisen würde, eine Verbindung mit einem RTP-Datenstrom aufzubauen. Der SDP-Abschnitt innerhalb der Nachricht 38 sieht dann wie folgt aus:
v = 0
o = alice 2890844526 2890844527 IN IP4 host.anywhere.com
s = New board design
e = alice@foo.org
t = 0 0
c = IN IP4 host.anywhere.com
m = audio 49170 RTP/AVP 4
a = rtpmap:4 G723/8000

Durch die SIP re-INVITE Nachricht 38 wird der MGC 11 angewiesen, vom Leitungsnetz 3 eintreffende Signaltöne out-of-band zu übertragen. Dass das dem MGC 11 zugeordnete MG 8 dazu in der Lage ist, hat der MGC 11 dem Anwendungsserver 12 bereits in der SIP INVITE-Nachricht 28 mitgeteilt.

Im Folgenden erhält der MGC 16 auf der B-Seite eine SIP INVITE Nachricht 39, mit der er aufgefordert wird, das zugeordnete MG 17 zu veranlassen, mit dem MG 8 eine Verbindung über das Paketnetz 9 aufzubauen. Der Eingang der Nachrichten 38 und 39 wird vom MGC 11 mit der SIP 100 Trying-Meldung 40 und vom MGC 16 mit der SIP 100 Trying-Meldung 41 beantwortet. Nach dem Einrichten der Verbindung setzt der MGC 11 die SIP 200 OK-Meldung 42 ab, die vom Anwendungsserver 12 mit der SIP ACK-Bestätigung 43 quittiert wird. Der MGC 16 sendet zunächst die SIP 180 Ringing-Nachricht 44 und anschließend die SIP 200 OK-Meldung 45, die vom Anwendungsserver 12 mit der SIP ACK-Bestätigung 46 quittiert wird. Damit ist die Verbindung zwischen dem ersten Teilnehmer auf der A-Seite und dem zweiten Teilnehmer auf der B-Seite im Bereich des Paketnetzes 9 mit Hilfe des RTP-Datenstroms 26 eingerichtet. Digitale Signaltöne im Informationsfluss zwischen dem ersten Teilnehmer und dem zweiten Teilnehmer werden jedoch vom MGC 11 abgezweigt und mit Hilfe der SIP INFO-Methode durch eine Out-of-band Übertragung 47 an den Anwendungsserver 12 weitergeleitet, indem das Auftreten von Signaltönen dem Anwendungsserver signalisiert wird.

Falls der Anwendungsserver 12 Signaltöne detektiert, die ein erneutes Umschalten der Verbindung zum Mediaserver 13 erfordern, setzt der Anwendungsserver 12 erneut eine der SIP 200 OK-Nachricht 34 entsprechende Nachricht an den MGC 11 ab, um diesen zum Aufbau einer Verbindung mittels RTP-Datenstrom 14 zum Mediaserver 13 zu veranlassen.

Durch das hier beschriebene Verfahren wird somit eine Verbindung über das Paketnetz 9 realisiert, bei der die Verkehrsströme in den TDM-Verbindungen 7 und 19 von den in den MG 8 und 17 vorhandenen komprimierenden Codecs G.723 in den RTP-Datenstrom 26 umgewandelt werden. Die Signaltöne können dabei mit speziellen RTP-Paketen gemäß RFC 2833 übertragen werden. Die Übertragung in speziellen RTP-Paketen ist notwendig, da die komprimierenden Codecs G.723 ansonsten die Signaltöne verfälschen würden.

Die Besonderheit des hier beschriebenen Verfahrens besteht darin, dass beim Einrichten der Verbindung von der A-Seite auf die B-Seite von der Übertragung der Signaltöne nach RFC 2833 in eine Out-of-band-Übertragung über das Signalisierungsnetz 15 mit Hilfe der SIP INFO-Methode umgeschaltet wird. Auf diese Weise können sogenannte "Mid-call Trigger" während der Verbindung zwischen dem ersten und zweiten Teilnehmer über das Paketnetz 9 erkannt werden.

Das anhand von Figur 1 eingeführte Informationselement "dtmf" ist insofern notwendig, als ansonsten nicht-komprimierende Codecs, wie beispielsweise G.711 nicht auf die Out-of-band Übertragung umgeschaltet werden können. Denn nicht-komprimierende Codecs nach G.711 übertragen Signaltöne ohne Unterschied zusammen mit den restlichen akustischen Signalen, so dass eine Out-of-band Übertragung in den herkömmlichen Standards nicht vorgesehen ist. Es ist daher notwendig, das Informationselement "dtmf" vorzusehen, durch das dem Anwendungsserver angezeigt wird, dass das jeweilige MG die Out-of-band Übertragung beherrscht, und mit dem das jeweilige MG in die Out-of-band Übertragung umgeschaltet werden kann.

Es sei darauf hingewiesen, dass das hier beschriebene Verfahren nicht notwendigerweise in den zitierten Standards implementiert werden muss. Auch eine analoge Implementierung in entsprechenden Standards ist möglich.

Ferner sei darauf hingewiesen, dass Begriffe wie Media Gateway, Media Gateway Controller, Anwendungsserver, Mediaserver funktional zu verstehen sind. Diese logischen Einheiten müssen nicht notwendig physikalische Einheiten bilden, sondern können auch in einer physikalischen Einheit in der Form von Software realisiert oder auch über mehrere physikalische Einheiten verteilt sein.

## Patentansprüche

1. Verfahren zur Steuerung eines mit Hilfe eines Dienstservers (12) in einem Paketnetz (9) implementierten Netzdienstes mit den Verfahrensschritten:
- Aufbau eines Übermittlungsweges (2, 7, 19, 25, 26) von einem ersten Teilnehmer über das Paketnetz (9) zu einem zweiten Teilnehmer;
- Abzweigen der zur Steuerung des Dienstservers (12) erforderlichen Steuersignale aus dem Informationsfluss zwischen erstem Teilnehmer und zweitem Teilnehmer und Weiterleiten der Steuersignale über ein Signalisierungsnetz (15) zum Dienstserver (12);
- Auswerten der Steuersignale durch den Dienstserver (12); und
- Bereitstellen eines angeforderten Dienstmerkmals durch den Dienstserver (12).

2. Verfahren nach Anspruch 1,
bei dem die Steuersignale parallel zur Weiterleitung an den Dienstserver (12) auch an den zweiten Teilnehmer weitergeleitet werden.

3. Verfahren nach Anspruch 1 oder 2,
bei dem der erste Teilnehmer einem Leitungsnetz (3) zugeordnet ist und die Steuersignale durch eine zwischen Paketnetz (9) und Leitungsnetz (3) angeordnete Übermittlungsstelle (8) abgezweigt werden.

4. Verfahren nach Anspruch 3,
bei dem die Steuersignale im Bereich des Leitungsnetzes (3) Signaltöne sind.

5. Verfahren zur Steuerung eines mit Hilfe eines Dienstservers (12) in einem Paketnetz (9) implementierten Netzdienstes mit den Verfahrensschritten:
- Aufbau eines Übermittlungsweges (2, 7, 14) von einem Teilnehmer zu einem Mediaserver (13);
- Übermittlung von Steuerinformation vom Teilnehmer über das Paketnetz (9) an den Mediaserver (13);
- Auswertung der Steuerinformation durch den Mediaserver (13) und Umsetzung der Steuerinformation in Steuersignale für den Dienstserver (12);
- Weiterleiten der Steuersignale über ein Signalisierungsnetz (15) an den Dienstserver (12);
- Auswertung der Steuersignale durch den Dienstserver (12); und
- Bereitstellen eines angeforderten Dienstmerkmals durch den Dienstserver.

6. Verfahren nach Anspruch 5,
bei dem Signaltöne in den Informationsfluss zum Mediaserver (13) eingebettet übermittelt werden.

7. Verfahren nach Anspruch 5 oder 6,
bei dem auf ein Verfahren nach einem der Ansprüche 1 bis 5 umgeschaltet wird.

8. Übermittlungsstelle zwischen einem Leitungsnetz (3) und einem Paketnetz (9),
die zur Ausführung einer der Verfahren nach einem der Ansprüche 1 bis 7 eingerichtet ist.

9. Dienstserver zur Implementierung eines Netzdienstes in einem Paketnetz (9), der zur Ausführung einer der Verfahren nach einem der Ansprüche 1 bis 7 eingerichtet ist.

10. Mediaserver zum Erfassen von durch einen Teilnehmer erzeugten Informationen,
der zur Ausführung eines Verfahrens nach einem der Ansprüche 5 bis 7 eingerichtet ist.

11. Computerprogrammprodukt zum Betrieb einer Übermittlungsstelle, eines Dienstservers oder eines Mediaservers, das zur Ausführung eines Verfahrens nach einem der Ansprüche 1 bis 7 eingerichtet ist.
